# EUROPÄISCHE PATENTSCHRIFT

(11) **EP 2 914 463 B1**
(45) Veröffentlichungstag und Bekanntmachung des Hinweises auf die Patenterteilung: **30.08.2017**
(21) Anmeldenummer: 13779736.1
(22) Anmeldetag: 18.10.2013
(51) Int. Cl.: B60S 1/08, B60R 11/04

(54) **HALTERUNG ZUM BEFESTIGEN EINES BAUTEILS AN EINER GLASSCHEIBE**
HOLDER FOR FIXING A COMPONENT TO A GLASS PANE
ATTACHE POUR LA FIXATION D'UN COMPOSANT SUR UNE VITRE

(30) Priorität: 02.11.2012 DE 102012021571
(43) Veröffentlichungstag der Anmeldung: 09.09.2015
(73) Patentinhaber: Daimler AG, 70327 Stuttgart (DE)
(72) Erfinder: KRUG, Martin, 76189 Karlsruhe (DE); SCHMIDT, Axel, 70794 Filderstadt (DE)
(74) Vertreter: JENSEN & SON
(86) Internationale Anmeldenummer: PCT/EP2013/003134
(87) Internationale Veröffentlichungsnummer: WO 2014/067624

(56) Entgegenhaltungen:
- WO-A1-2013/087145
- DE-A1- 10 211 444
- DE-A1-102008 050 320

## Beschreibung

Die vorliegende Erfindung betrifft eine Halterung zum Befestigen wenigstens eines Bauteils an einer Glasscheibe, insbesondere an einer Windschutzscheibe eines Kraftfahrzeugs, mit den Merkmalen des Oberbegriffs des Anspruchs 1.

Aus der DE 102 11 444 A1 ist eine derartige Halterung bekannt. Die umfasst einen Tragkörper, der eine Unterseite und eine Oberseite aufweist. Mit der Unterseite kann der Tragkörper mittels Verklebung an die Glasscheibe angeklebt werden. An der Oberseite sind Halteelemente zum Befestigen des wenigstens einen Bauteils am Tragkörper angeordnet.

Die bekannte Halterung dient zum Festlegen eines Licht- und Regensensors an der Glasscheibe. Gleichzeitig umschließt die bekannte Halterung einen Haltefuß, mit dessen Hilfe ein Innenrückblickspiegel des Fahrzeugs an der Glasscheibe befestigt werden kann. Bei der bekannten Halterung ist der Tragkörper in mehrere Abschnitte untergliedert, die mit Dehnungsfugen miteinander verbunden sind. Die einzelnen Dehnungsfugen erstrecken sich dabei jeweils quer zu einer Längsrichtung des Tragkörpers. Ferner ist die jeweilige Dehnungsfuge durch einen Schlitz und zumindest zwei den Schlitz überbrückenden U-förmigen Bügeln gebildet. Der jeweilige Schlitz durchdringt den Tragkörper, wodurch die einzelnen Abschnitte relativ zueinander beweglich sind. Über die Bügel bleiben die Abschnitte jedoch miteinander in Verbindung. Durch diese Segmentierung des Tragkörpers lassen sich thermisch bedingte Dehnungseffekte beherrschen.

Eine weitere Halterung, deren Trägerplatte mit Dehnungsfugen ausgestattet ist, zeigt die DE 10 2008 050 320 A1.

Eine weitere Halterung, mit deren Hilfe ein Licht- und Regensensor an einer Windschutzscheibe eines Kraftfahrzeugs befestigt werden kann, ist aus der DE 10 2004 061 361 A1 bekannt.

Bei modernen Fahrzeugen können mit Hilfe einer derartigen Halterung zusätzlich zu einem Regen- und Lichtsensor, in den außerdem ein Beschlagsensor integriert sein kann, weitere Bauteile an der Windschutzscheibe montiert werden, wie zum Beispiel eine Kamera. Eine derartige Kamera kann zur Fahrbahnerkennung sowie zur Fahrbahnüberwachung genutzt werden. Ebenso kann es sich um eine Nachtsichtkamera, insbesondere um eine Infrarotkamera, handeln, die bei reduzierter Sicht beispielsweise eine thermische Erkennung von Hindernissen ermöglicht. Des Weiteren können auch Stereo-Kamera-Systeme zur Anwendung kommen, bei denen für den jeweiligen Zweck zwei Kameras oder eine Stereokamera mit zwei Objektiven angeordnet sind, mit deren Hilfe ein dreidimensionales Bild generiert werden kann. Dreidimensionale Bilder lassen sich beispielsweise zur Bestimmung von Abständen und dergleichen nutzen.

Demnach besteht ein Bedarf für vergleichsweise große Halterungen, die großflächig an der jeweiligen Glasscheibe befestigt werden müssen und mit deren Hilfe mehrere, vergleichsweise schwere Bauteile an der Glasscheibe fixiert werden können. Aufgrund von Herstellungstoleranzen können die Formen der Glasscheiben, insbesondere die Krümmungsradien von Windschutzscheiben schwanken. Ebenso können Herstellungstoleranzen für die vorzugsweise aus Kunststoff spritzgeformten Halterungen zu variierenden Abmessungen und Formen bei der Halterung führen. Ferner besteht insbesondere bei Windschutzscheiben das Problem, dass die Krümmung der Windschutzscheibe bei einer großen Halterung dazu führt, dass ein durchgehender Tragkörper beim Verkleben zum Erzeugen eines homogenen Klebespalts vergleichsweise stark angepresst werden muss. Wird der Anpressdruck vor dem endgültigen Aushärten oder Austrocknen des Klebstoffs reduziert, übersteigt die im Tragkörper enthaltene, federelastische Rückstellkraft die Haltekraft des Klebstoffs, was die Anbindung der Halterung an die Glasscheibe verschlechtert.

Die vorliegende Erfindung beschäftigt sich mit dem Problem, für eine Halterung der eingangs genannten Art eine verbesserte Ausführungsform anzugeben, die sich insbesondere dadurch auszeichnet, dass die Halterung leichter an der Glasscheibe befestigt werden kann.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, im Tragkörper wenigstens einen ersten Abschnitt, der zum Befestigen wenigstens eines Bauteils vorgesehen ist, mit Hilfe von zwei separaten Schlitzen in einem weiten Teil vom übrigen Tragkörper zu trennen. Dabei beginnen die beiden Schlitze, die separat, also voneinander beabstandet verlaufen, an einem umlaufenden Außenrand des Tragkörpers und enden an einem Verbindungsbereich, der vom Außenrand beabstandet ist, also innerhalb des Tragkörpers liegt. Über diesen Verbindungsbereich bleibt dieser erste Abschnitt mit dem übrigen Tragkörper verbunden. Die Schlitze durchsetzen den Tragkörper senkrecht zur Ebene des Tragkörpers vollständig. Der Tragkörper weist eine in seiner Ebene gemessene Länge und quer dazu eine ebenfalls in der Tragkörperebene gemessene Breite auf. Die beiden Schlitze können sich je nach Größe des jeweiligen ersten Abschnitts, die ihrerseits von der Größe des jeweiligen daran anzubringenden Bauteils abhängt, z.B. über wenigstens 50 % der Breite des Tragkörpers, vorzugsweise über wenigstens 75 % der Breite des Tragkörpers, erstrecken, jedoch nicht vollständig über die gesamte Breite des Tragkörpers. Durch die Schlitze wird somit der jeweilige erste Abschnitt weitgehend vom übrigen Tragkörper frei geschnitten, wodurch der erste Abschnitt gegenüber dem übrigen Tragkörper weitgehend beweglich ist, beispielsweise um thermisch bedingte Bewegungen zu kompensieren. Gleichzeitig kann der Tragkörper so einer Krümmung der Glasscheibe besser folgen, ohne dass unerwünscht hohe Rückstellkräfte entstehen. Durch die Schlitze kann somit das Anbringen der Halterung an einer gekrümmten Glasscheibe, vorzugsweise an einer Windschutzscheibe, vereinfacht werden. Die Schlitze erstrecken sich bevorzugt quer zur Tragkörperlängsrichtung; sie besitzen zumindest einen quer zur Tragkörperlängsrichtung verlaufenden Längsabschnitt.

Bei dem jeweiligen Bauteil, das im jeweiligen ersten Abschnitt montiert werden soll, kann es sich vorzugsweise um einen Regensensor oder einen Lichtsensor oder einen Beschlagsensor oder um eine beliebige Kombination daraus handeln. Ebenso ist denkbar, eine Nachsichtkamera mithilfe eines solchen ersten Abschnitts an der Halterung anzubringen. Auch kann beispielsweise ein Lötverteiler, mit dessen Hilfe Lötstellen, die elektrische Kontakte einer in die Glasscheibe integrierten elektrischen Scheibenheizung bilden, mit elektrischer Energie versorgt werden können, mithilfe eines derartigen ersten Abschnitts an der Halterung angebracht werden. Insbesondere ist dabei denkbar, dass am Tragkörper zwei oder mehr solche erste Abschnitte vorgesehen sind, die gegenüber dem übrigen Tragkörper beweglich angeordnet sind.

Bei einer vorteilhaften Ausführungsform kann der Verbindungsbereich durch ein Filmscharnier gebildet sein, das den ersten Abschnitt mit dem übrigen Tragkörper beweglich verbindet. Das Filmscharnier definiert eine Schwenkachse, die sich bevorzugt parallel zur Tragkörperlängsrichtung erstreckt. Gemäß einer besonders vorteilhaften Ausführungsform kann der Verbindungsbereich über ein erstes Filmscharnier beweglich mit dem ersten Abschnitt verbunden sein und über ein zweites Filmscharnier beweglich mit dem übrigen Tragkörper verbunden sein. Zweckmäßig erstrecken sich Schwenkachsen, die durch das jeweilige Filmscharnier definiert werden, parallel zueinander, wobei die jeweilige Schwenkachse außerdem parallel zur Tragkörperebene verläuft. Ferner können sich die Schwenkachse bzw. die Filmscharniere parallel zur Längsrichtung des Tragkörpers erstrecken. Mit Hilfe der Filmscharniere ergibt sich außerdem eine verbesserte Beweglichkeit des ersten Abschnitts senkrecht zur Tragkörperebene bezüglich des übrigen Tragkörpers. Dies ist von besonderem Interesse für den Fall, dass das erste Bauteil ein Regen- und Lichtsensor ist, der sich bei ungünstigen Randbedingungen von der Glasscheibe lösen kann. Die mit Hilfe der Filmscharniere ermöglichte Beweglichkeit des ersten Abschnitts gegenüber dem übrigen Tragkörper verhindert beim Lösen des Regen- und Lichtsensors nachteilige Wechselwirkungen für die übrigen Bauteile, die über den übrigen Tragkörper an der Glasscheibe fixiert sind. Beispielsweise können am übrigen Tragkörper zwei Kameras eines Stereo-Kamera-Systems bzw. zwei Objektive einer Stereokamera angeordnet sein, wobei das jeweilige Kamera-System in ein Sicherheitssystem des Fahrzeugs eingebunden sein kann, das beispielsweise autonome Notbrems- und/oder Ausweichvorgänge einleiten kann. Eine Positionsänderung einer solchen Kamera bzw. eines solchen Objektivs könnte zu erheblichen Nachteilen führen.

Bei einer anderen vorteilhaften Ausführungsform kann zumindest bei einem der Schlitze am ersten Abschnitt ein erster Bügel ausgebildet sein, der den jeweiligen Schlitz überragt und freistehend endet, während am übrigen Tragkörper ein zweiter Bügel ausgebildet ist, der den jeweiligen Schlitz überragt und freistehend endet, wobei die beiden Bügel, insbesondere fluchtend, übereinander und zueinander beabstandet angeordnet sind und sich gegenseitig überlappen. Die Bügel führen zu einer Begrenzung der Relativbewegung des ersten Abschnitts gegenüber dem übrigen Tragkörper in einer Richtung, die senkrecht zur Ebene des Tragkörpers verläuft.

Bei einer vorteilhaften Weiterbildung kann ein zweiter Abschnitt des Tragkörpers, der zum Befestigen wenigstens eines weiteren Bauteils vorgesehen ist, über eine Dehnfuge mit einem den Verbindungsbereich enthaltenden Zentralbereich des Tragkörpers beweglich verbunden sein. Optional kann außerdem ein dritter Abschnitt des Tragkörpers, der ebenfalls zum Befestigen wenigstens eines weiteren Bauteils vorgesehen ist, über eine Dehnfuge mit dem Zentralbereich beweglich verbunden sein.

Beispielsweise kann es sich bei den weiteren Bauteilen jeweils um eine Kamera eines Stereo-Kamera-Systems bzw. jeweils um ein Objektive einer Stereokamera handeln. Die beiden Abschnitte schließen sich an gegenüberliegenden Seiten des Zentralbereichs an den Zentralbereich und an den ersten Abschnitt an, und zwar in der Längsrichtung des Tragkörpers. Sofern also der Tragkörper in die genannten drei Abschnitte unterteilt ist, liegen der zweite Abschnitt und der dritte Abschnitt an den Außenseiten, während der erste Abschnitt zwischen den beiden äußeren Abschnitten angeordnet ist.

Besonders vorteilhaft ist eine Weiterbildung, bei welche die jeweilige Dehnfuge durch einen Schlitz und zumindest einen Bügel gebildet ist, der den Schlitz bogenförmig überbrückt. Zweckmäßig ist je Dehnfuge nur ein einziger Bügel vorgesehen, der den zugehörigen Schlitz über eine wesentliche Schlitzlänge, vorzugsweise über die gesamte Schlitzlänge, überbrückt.

Grundsätzlich ist es möglich, dass der Schlitz der jeweiligen Dehnfuge in einen Schlitz zum Abtrennen des ersten Abschnitts offen übergeht. Ferner können die Schlitze rechtwinkelig verlaufen, so dass sie sich abschnittsweise entweder parallel zur Breitenrichtung oder Querrichtung des Tragkörpers oder parallel zur Längsrichtung des Tragkörpers erstrecken. Hierdurch lässt sich die gewünschte Beweglichkeit besonders günstig an die Krümmung der Glasscheibe anpassen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch:
- Fig. 1: eine isometrische Ansicht einer Halterung,
- Fig. 2: eine Draufsicht auf die Halterung im Bereich eines ersten Abschnitts,
- Fig. 3: eine isometrische Ansicht auf ein Detail III in Fig. 2,
- Fig. 4: eine isometrische Schnittansicht entsprechend einer Schnittlinie IV in Fig. 2.

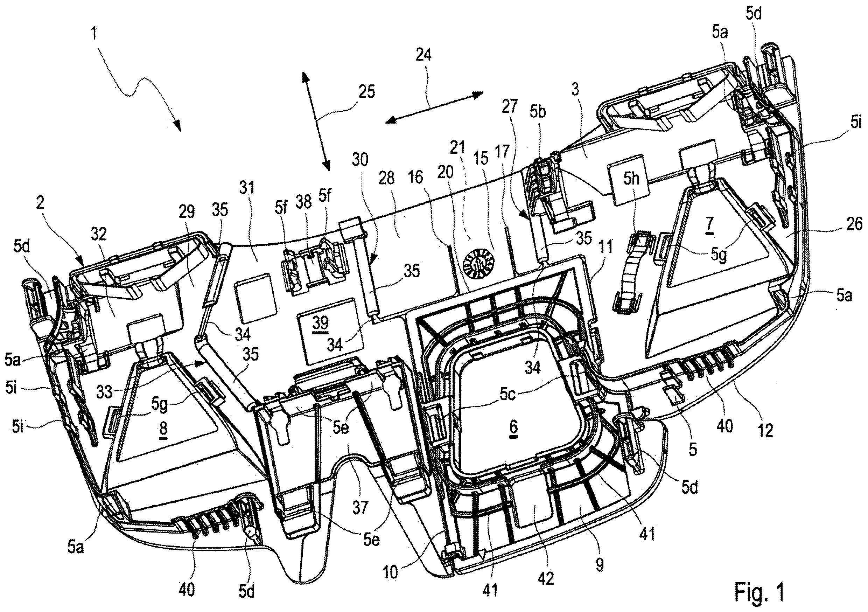

Entsprechend Figur 1 umfasst eine Halterung 1, mit deren Hilfe zumindest ein Bauteil an einer Glasscheibe, vorzugsweise an einer Windschutzscheibe eines Kraftfahrzeugs, befestigt werden kann, einen Tragkörper 2, der eine in den Figuren 1 bis 4 dem Betrachter zugewandte Oberseite 3 und eine vom Betrachter abgewandte Unterseite 4 aufweist. Mit der Unterseite 4 ist der Tragkörper 2 mittels Verklebung an die Glasscheibe anklebbar. An der Oberseite 3 sind Halteelemente 5 angeordnet, mit deren Hilfe Bauteile am Tragkörper 2 befestigt werden können. Der hier dargestellte Tragkörper 2 dient zur Aufnahme von wenigstens drei Bauteilen. Erkennbar sind ein erster Bauteilplatz 6 zur Positionierung eines ersten Bauteils, ein zweiter Bauteilplatz 7 zur Positionierung eines zweiten Bauteils und ein dritter Bauteilplatz 8 zur Positionierung eines dritten Bauteils. Das erste Bauteil kann beispielsweise ein kombinierter Regen- und Lichtsensor sein, in den außerdem ein Beschlagsensor integriert sein kann. Für den Beschlagsensor kann der Tragkörper 2 dann mit einem zusätzlichen Fenster 42 ausgestattet sein. Das zweite Bauteil kann eine Kamera sein. Das dritte Bauteil 8 kann ebenfalls eine Kamera sein, wodurch insgesamt ein Stereo-Kamera-System realisiert werden kann. Anstelle von zwei separaten Kameras können das zweite und dritte Bauteil auch durch zwei Objektive einer Stereokamera gebildet sein. Am hier gezeigten Tragkörper 2 befinden sich außerdem weitere Halteelemente 5 und Bauteilplätze, um weitere Komponenten, Sensoren, Leitungen und dergleichen am Tragkörper 2 fixieren zu können. Beispielsweise sind hier ein vierter Bauteilplatz 37 zur Positionierung eines vierten Bauteils sowie ein fünfter Bauteilplatz 38 zur Positionierung eines fünften Bauteils erkennbar. Zum Beispiel kann das vierte Bauteil eine Nachtsichtkamera sein, z.B. eine Infrarotkamera. Das fünfte Bauteil kann ein sogenannter Lötverteiler sein, mit dem hier elektrische Kontakte der Glasscheibe mit elektrischer Energie versorgt werden können. Diese Kontakte befinden sich bei an der Glasscheibe angebrachter Halterung 1 vorzugsweise in einem Fenster 39, das im Tragkörper 2 ausgespart ist, und sind mit einer in die Glasscheibe integrierten elektrischen Scheibenheizung elektrisch verbunden. Außerdem sind einige der Halteelemente 5 zum Verrasten einer hier nicht gezeigten Abdeckung vorgesehen, die als Schale ausgestaltet sein kann und den gesamten Tragkörper 2 abdecken kann. Weitere Haltelemente 5 dienen beispielsweise zum Anbringen von Blindabdeckungen, die z.B. den einen oder anderen Bauteilplatz 6, 7, 8, 37, 38 vor Verunreinigungen schützen, falls die Glasscheibe mit daran angebrachter Halterung 1 zwischengelagert oder transportiert wird, bevor die Glasscheibe in ein Fahrzeug eingebaut und/oder bevor die Bauteile in die Halterung eingebaut werden.

Beispielsweise dienen die Halteelemente 5a zur Befestigung der Stereokamera bzw. des Stereo-Kamera-Systems. Die Halteelemente 5b können z.B. zum Montieren einer Monokamera geutzt werden. Die Halteelemente 5c lassen sich beispielsweise zum Befestigen des Regen- und Lichtsensors oder einer Blindabdeckung verwenden. Die Halteelemente 5d können zum Befestigen der schalenförmigen Abdeckung genutzt werden. Die Halteelemente 5e lassen sich z.B. zum Anbringen der Nachtsichtkamera verwenden. Mit den Halteelementen 5f kann der Lötverteiler befestigt werden. Die Halteelemente 5g können zur Fixierung von Blindabdeckungen verwendet werden. Mit den Halteelementen 5h lassen sich Federelemente befestigen. Die Halteelemente 5i dienen als Kabelhalter und Kabelführung. Außerdem können Widerlagerkulissen 40 zum Abstützen eines Werkzeugs vorgesehen sein, beispielsweise um die jeweilige Kamera bzw. das jeweilige Objektiv wieder ausbauen zu können. Rippen 41 können zur Aussteifung des Tragkörpers 2 im Bereich des ersten Bauteilplatzes 6 vorgesehen sein.

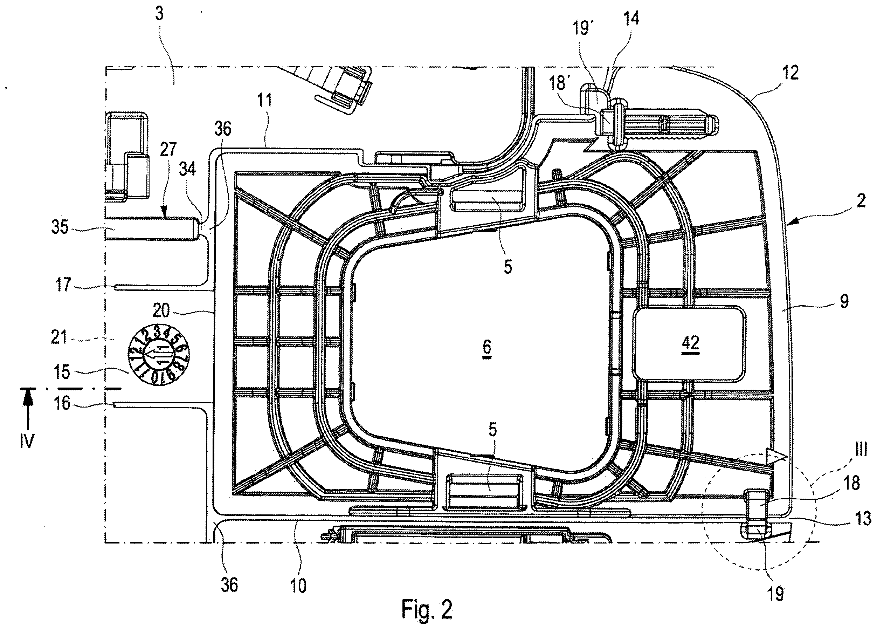

Bei der hier vorgestellten Halterung 1 ist gemäß den Figuren 1 und 2 ein erster Abschnitt 9 des Tragkörpers 2, der zum Befestigen des ersten Bauteils vorgesehen ist, entlang von zwei separaten Schlitzen 10, 11 vom übrigen Tragkörper 2 getrennt. Dabei beginnen beide Schlitze 10, 11 an einem Außenrand 12 des Tragkörpers, besitzen also eine zum bzw. am Außenrand 12 offene Mündung 13 bzw. 14. Ferner enden beide Schlitze 10, 11 an einem Verbindungsbereich 15. Das jeweilige Schlitzende ist in den Figuren 1 und 2 mit 16 bzw. 17 bezeichnet. Über den Verbindungsbereich 15 ist der erste Abschnitt 9 mit dem übrigen Tragkörper 2 verbunden.

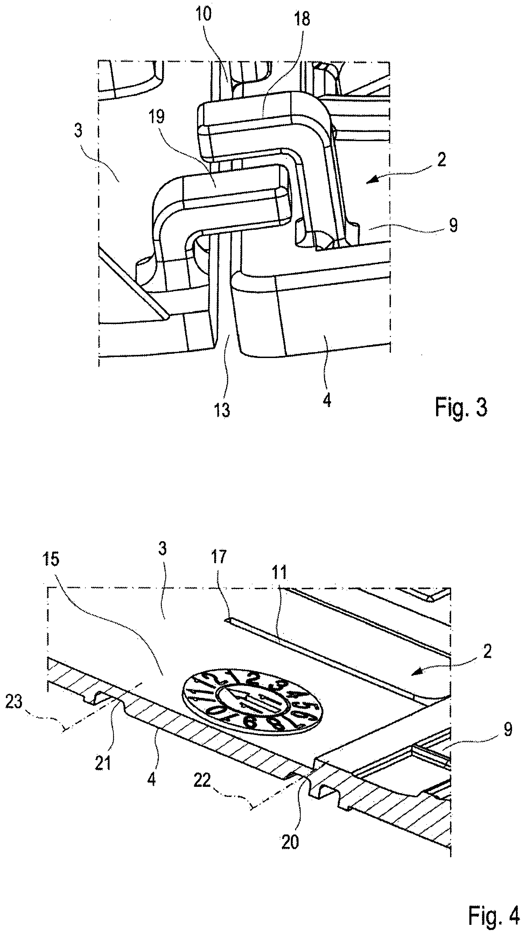

Gemäß den Figuren 1 bis 3 ist zumindest bei einem der Schlitze 10, 11, hier zumindest gemäß Figur 3 bei dem mit "10" bezeichneten Schlitz am ersten Abschnitt 9 ein erster Bügel 18 ausgebildet, der den jeweiligen Schlitz 10 überragt und freistehend endet. Der erste Bügel 18 ist hierzu L-förmig ausgestaltet. Am übrigen Tragkörper 2 ist ein zweiter Bügel 19 ausgebildet, der ebenfalls den jeweiligen Schlitz 10 überragt und freistehend endet und hier ebenfalls L-förmig ausgestaltet ist. Des Weiteren sind die beiden Bügel 18, 19 am selben Abschnitt des jeweiligen Schlitzes 10 angeordnet, jedoch so gestaltet, dass sie übereinander und zueinander beabstandet positioniert sind. Eine ähnliche Konfiguration mit zwei Bügeln 18, 19 ist gemäß Figur 2 auch beim anderen Schlitz 11 erkennbar und dort mit 18' bzw. 19' bezeichnet. Die Bügel 18, 19 bzw. 18', 19' sind senkrecht zur Tragkörperebene fluchtend zueinander und einander überlappend angeordnet, so dass sie einen Bewegungsanschlag definieren.

Entsprechend den Figuren 1, 2 und 4 ist der Verbindungsbereich 15 über ein erstes Filmscharnier 20 beweglich mit dem ersten Abschnitt 9 verbunden und über ein zweites Filmscharnier 21 beweglich mit dem übrigen Tragkörper 2 verbunden. Das erste Filmscharnier 20 definiert gemäß Figur 4 eine erste Schwenkachse 22, die parallel zu einer Ebene verläuft, in der der Tragkörper 2 liegt. Das zweite Filmscharnier 21 definiert eine zweite Schwenkachse 23, die ebenfalls parallel zur Tragkörperebene verläuft. Ferner verlaufen die beiden Schwenkachsen 22, 23 parallel zueinander sowie parallel zu einer in Figur 1 durch einen Doppelpfeil angedeuteten Längsrichtung 24 des Tragkörpers 2. Ebenfalls in Figur 1 angedeutet ist eine Querrichtung oder Breitenrichtung 25 des Tragkörpers 2. Die Längsrichtung 24 und die Breitenrichtung 25 spannen die Tragkörperebene auf und stehen senkrecht aufeinander.

Entsprechend Figur 1 ist bei der hier vorgestellten Halterung 1 am Tragkörper 2 ein zweiter Abschnitt 26 ausgebildet, der zum Befestigen des zweiten Bauteils vorgesehen ist und der über eine Dehnfuge 27 mit einem Zentralbereich 28 des Tragkörpers 2 verbunden ist, der den Verbindungsbereich 15 enthält. Ferner ist ein dritter Abschnitt 29 vorgesehen, der zum Befestigen des dritten Bauteils vorgesehen ist und der über eine weitere Dehnfuge 30 ebenfalls mit dem Zentralbereich 28 beweglich verbunden ist. Im Beispiel der Figur 1 ist der dritte Abschnitt 29 außerdem in zwei Teilabschnitte 31, 32 unterteilt, die über eine weitere Dehnfuge 33 beweglich miteinander verbunden sind. Der eine Teilabschnitt 32 ist zur Aufnahme des dritten Bauteils vorgesehen und ist über den anderen Teilabschnitt 31 mit dem Zentralbereich 28 beweglich verbunden.

Die jeweilige Dehnfuge 27, 30, 33 ist dabei jeweils durch einen Schlitz 34 und einen Bügel 35 gebildet, der den jeweiligen Schlitz 34 bogenförmig überbrückt. Zweckmäßig erstreckt sich der jeweilige Bügel 35 über die gesamte Länge des zugehörigen Schlitzes 34. Lediglich zwischen den beiden Teilabschnitten 31, 32 ist der Bügel 35 unterbrochen oder sind zwei Bügel 35 vorgesehen.

Wie sich insbesondere Figur 2 entnehmen lässt, kann sich der jeweilige Schlitz 10, 11, der zum Abtrennen des ersten Abschnitts 9 vom übrigen Tragkörper 2 dient, abschnittsweise parallel zur Trägerquerrichtung 25 und parallel zur Trägerlängsrichtung 24 erstrecken. Des Weiteren gehen bei der hier gezeigten Ausführungsform die Schlitze 10, 11 zum Abtrennen des ersten Abschnitts 9 in die Schlitze 34 der Dehnfugen 27, 30 über, über die der Zentralbereich 28 mit dem zweiten Abschnitt 26 und dem dritten Abschnitt 29 verbunden ist. Diese Übergangsstellen sind in Figur 2 mit 36 bezeichnet.

Obwohl bei der hier vorgestellten bevorzugten Ausführungsform nur ein solcher mittels der Schlitze 10, 11 gegenüber dem übrigen Tragkörper 2 beweglicher erster Abschnitt 9 vorgesehen ist, in dem sich der erste Bauteilplatz 6 befindet, kann bei einer anderen Ausführungsform vorgesehen sein, dass sich der jeweilige erste Abschnitt 9 innerhalb des Tragkörpers 2 an einer anderen Stelle befindet, beispielsweise im Bereich des vierten Bauteilplatzes 37 oder im Bereich des fünften Bauteilplatzes 38. Ebenso ist eine Ausführungsform denkbar, bei der mehrere solche erste Abschnitte 9 vorgesehen sind, z.B. zur Realisierung des ersten Bauteilpaltzes 6 sowie des vierten Bauteilplatzes 37 und/oder fünften Bauteilplatzes 38.

## Patentansprüche

1. Halterung zum Befestigen wenigstens eines Bauteils an einer Glasscheibe, insbesondere an einer Windschutzscheibe eines Kraftfahrzeugs, mit einem Tragkörper (2), der eine Unterseite (4), mit welcher der Tragkörper (2) mittels Verklebung an die Glasscheibe anklebbar ist, und eine Oberseite (3) aufweist, an der Halteelemente (5) zum Befestigen des wenigstens einen Bauteils am Tragkörper (2) angeordnet sind,
**dadurch gekennzeichnet, dass**
zumindest ein erster Abschnitt (9) des Tragkörpers (2), der zum Befestigen wenigstens eines Bauteils vorgesehen ist, entlang von zwei, den Tragkörper (2) senkrecht zur Ebene des Tragkörpers (2) vollständig durchsetzenden separaten Schlitzen (10, 11) vom übrigen Tragkörper (2) getrennt ist, wobei beide Schlitze (10, 11) an einem Außenrand (12) des Tragkörpers (2) beginnen und an einem Verbindungsbereich (15) beabstandet vom Außenrand (12) enden, über den der erste Abschnitt (9) mit dem übrigen Tragkörper (2) verbunden ist.

2. Halterung nach Anspruch 1,
**dadurch gekennzeichnet, dass**
der Verbindungsbereich (15) über ein erstes Filmscharnier (20) beweglich mit dem ersten Abschnitt (9) verbunden ist und über ein zweites Filmscharnier (21) beweglich mit dem übrigen Tragkörper (2) verbunden ist.

3. Halterung nach Anspruch 1 oder 2,
**dadurch gekennzeichnet, dass**
zumindest bei einem der Schlitze (10, 11) am ersten Abschnitt (9) ein erster Bügel (18, 18') ausgebildet ist, der den jeweiligen Schlitz (10, 11) überragt und freistehend endet, während am übrigen Tragkörper (2) ein zweiter Bügel (19, 19') ausgebildet ist, der den jeweiligen Schlitz (10, 11) überragt und freistehend endet, wobei die Bügel (18, 19, 18', 19) übereinander und zueinander beabstandet angeordnet sind.

4. Halterung nach einem der Ansprüche 1 bis 3,
**dadurch gekennzeichnet, dass**
- dass ein zweiter Abschnitt (26) des Tragkörpers (2), der zum Befestigen wenigstens eines weiteren Bauteils vorgesehen ist, über eine Dehnfuge (27) mit einem den Verbindungsbereich (15) enthaltenden Zentralbereich (28) des Tragkörpers (2) beweglich verbunden ist, und/oder
- dass ein dritter Abschnitt (29) des Tragkörpers (2), der zum Befestigen wenigstens eines weiteren Bauteils vorgesehen ist, über eine Dehnfuge (30) mit dem Zentralbereich (28) beweglich verbunden ist.

5. Halterung nach Anspruch 4,
**dadurch gekennzeichnet, dass**
die jeweilige Dehnfuge (27, 30) durch einen Schlitz (34) und einen Bügel (35) gebildet ist, der den Schlitz (34) bogenförmig überbrückt.

## Claims

1. Holder for securing at least one component to a glass pane, in particular to a windscreen of a motor vehicle, the holder comprising a support body (2) having an underside (4), with which the support body (2) can be attached to the glass pane by means of bonding, and a top side (3), on which holding elements (5) for securing at least one component to the support body (2) are arranged,
**characterised in that**
at least a first section (9) of the support body (2) provided for securing at least one component is separated from the rest of the support body (2) along two separate slots (10, 11), which completely pass through the support body (2) at right angles to the plane of the support body (2), the slots (10, 11) starting at an outer edge (12) of the support body (2) and ending in a connection region (15) remote from the outer edge (12), where the first section (9) is joined to the rest of the support body (2).

2. Holder according to claim 1,
**characterised in that**
the connection region (15) is movably joined to the first section (9) via a first film hinge (20) and movably joined to the rest of the support body (2) via a second film hinge (21).

3. Holder according to claim 1 or 2,
**characterised in that**
on at least one of the slots (10, 11) there is formed a first bracket (18, 18') projecting beyond the respective slot (10, 11) and ending in a cantilevered manner on the first section (9), while a second bracket (19, 19') projecting beyond the respective slot (10, 11) and ending in a cantilevered manner is formed on the rest of the support body (2), the brackets (18, 19, 18' 19') being arranged on top of and at a distance from one another.

4. Holder according to any of claims 1 to 3,
**characterised in that**
- a second section (26) of the support body (2), which is provided for securing at least one further component, is movably joined to a central region (28) of the support body (2), which contains the connection region (15), via an expansion joint (27), and/or
- **in that** a third section (29) of the support body (2), which is provided for securing at least one further component, is movably joined to the central region (28) via an expansion joint (30).

5. Holder according to claim 4,
**characterised in that**
the respective expansion joint (27, 30) is represented by a slot (34) and a bracket (35) bridging the slot (34) in the manner of a bow.

## Revendications

1. Fixation servant à fixer au moins un élément structural sur une glace, en particulier sur une glace de pare-brise d'un véhicule automobile, comprenant un corps (2) de support, qui présente une face inférieure (4) à laquelle le corps (2) de support peut être collé au moyen de collage sur la glace, et une face supérieure (3) sur laquelle sont disposés des éléments de retenue (5) pour fixer ledit élément structural sur le corps (2) de support, **caractérisée en ce qu'**au moins une première partie (9) du corps (2) de support qui sert à fixer au moins un élément structural, est séparée le long de deux fentes (10, 11) séparées introduisant entièrement le corps (2) de support verticalement par rapport au plan du corps (2) de support du reste du corps (2) de support, les deux fentes (10, 11) commençant sur un bord extérieur (12) du corps (2) de support et se terminant dans une zone de liaison (15) éloignée du bord extérieur (12), qui relie la première partie (9) au reste du corps (2) de support.

2. Fixation selon la revendication 1, **caractérisée en ce que** la zone de liaison (15) est reliée mobile à la première partie (9) au moyen d'un premier film-charnière (20) et est reliée mobile au reste du corps (2) de support au moyen d'un second film-charnière (21).

3. Fixation selon la revendication 1 ou la revendication 2, **caractérisée en ce que** sur au moins l'une des fentes (10, 11) aménagées dans la première partie (9) est formé un premier étrier (18, 18') qui fait saillie de la fente respective (10, 11) et se termine en étant autoportant, tandis que sur le reste du corps (2) de support est formé un second étrier (19, 19'), qui fait saillie de la fente respective (10, 11) et se termine en étant autoportant, les étriers (18, 19, 18', 19') étant disposés les uns sur les autres et étant éloignés les uns des autres.

4. Fixation selon l'une quelconque des revendications 1 à 3, **caractérisée en ce qu'**
- une deuxième partie (26) du corps (2) de support, qui est destinée à fixer au moins un autre élément structural, est reliée mobile au moyen d'un joint de dilatation (27) à une zone centrale (28) contenant la zone de liaison (15), du corps (2) de support, et/ou
- une troisième partie (29) du corps (2) de support qui est destinée à fixer au moins un autre élément structural, est reliée mobile au moyen d'un joint de dilatation (30) à la zone centrale (28).

5. Fixation selon la revendication 4, **caractérisée en ce que** le joint de dilatation respectif (27, 30) est formé par une fente (34) et un étrier (35) qui s'étend en forme d'arc au-dessus de la fente (34).
